# EUROPÄISCHE PATENTSCHRIFT

(11) **EP 4 214 099 B1**
(45) Veröffentlichungstag und Bekanntmachung des Hinweises auf die Patenterteilung: **04.06.2025**
(21) Anmeldenummer: 21746009.6
(22) Anmeldetag: 16.07.2021
(51) Int. Cl.: B60T 8/175, B60T 8/174

(54) **VERFAHREN UND STEUERGERÄT ZUM REGELN EINES SCHLUPFS ZUMINDEST EINES RADS EINES FAHRZEUGS**
METHOD AND CONTROLLER FOR CONTROLLING SLIP OF AT LEAST ONE WHEEL OF A VEHICLE
PROCÉDÉ ET DISPOSITIF DE COMMANDE PERMETTANT DE COMMANDER LE PATINAGE D'AU MOINS UNE ROUE D'UN VÉHICULE

(30) Priorität: 21.09.2020 DE 102020211789
(43) Veröffentlichungstag der Anmeldung: 26.07.2023
(73) Patentinhaber: Robert Bosch GmbH, 70442 Stuttgart (DE)
(72) Erfinder: WEIDMANN, Dirk, 74321 Bietigheim-Bissingen (DE); ERDEN, Michael, 74321 Bietigheim-Bissingen (DE); SCHARBAK, Rami, 71726 Benningen (DE); STUMM, Marco, 71636 Ludwigsburg (DE); HOFFMANN, Kai, 74360 Ilsfeld (DE); LOEFFELMANN, Valentin, 69234 Dielheim (DE)
(86) Internationale Anmeldenummer: PCT/EP2021/069977
(87) Internationale Veröffentlichungsnummer: WO 2022/058067

(56) Entgegenhaltungen:
- CN-A- 111 452 781
- DE-A1- 102013 205 320
- US-B1- 6 397 139
- US-B1- 6 542 806

## Beschreibung

### Gebiet der Erfindung

Die Erfindung betrifft ein Verfahren zum Regeln eines Schlupfs zumindest eines Rads eines Fahrzeugs sowie ein entsprechendes Steuergerät.

### Stand der Technik

Wenn ein Rad eines Fahrzeugs auf dem Untergrund rollt, tritt ein Schlupf zwischen dem Rad und dem Untergrund auf, wenn dabei eine Kraft in einer Rollrichtung oder entgegen der Rollrichtung und/oder quer zu der Rollrichtung auf den Untergrund übertragen wird. Der Schlupf kann in der Rollrichtung beziehungsweise entgegen der Rollrichtung als Verhältnis einer Drehgeschwindigkeit des Rads zu einer tatsächlichen Bewegungsgeschwindigkeit des Rads ausgedrückt werden. Bis zu einem bestimmten Schlupfwert steigt eine übertragbare Kraft an. Wird dieser Wert überschritten sinkt die übertragbare Kraft ab und das Rad fängt an zu rutschen. In Rollrichtung kann das Rutschen als Durchdrehen bezeichnet werden. Entgegen der Rollrichtung kann das Rutschen als Blockieren bezeichnet werden.

Um das Durchdrehen zu verhindern, kann das Fahrzeug eine Antriebsschlupfregelung aufweisen. Die Antriebsschlupfregelung modelliert physikalische Zusammenhänge am Fahrzeug und begrenzt ein Antriebsmoment am Rad, bevor das Rad ins Rutschen gerät. Dabei kann die Antriebsschlupfregelung ein Bremssystem des Fahrzeugs und/oder ein Antriebssystem des Fahrzeugs ansteuern, um das Antriebsmoment zu begrenzen.

Um die Antriebsschlupfregelung am Fahrzeug zu applizieren, werden Parameter der Antriebsschlupfregelung von einem Applikateur in einem aufwendigen Optimierungsvorgang eingestellt.

Die US 6,542,806 B1 beschreibt ein Verfahren zur Steuerung der Traktion eines Bodenfahrzeugs.

Die DE 10 2013 205 320 A1 beschreibt eine Traktionskontrollvorrichtung für ein Motorrad.

### Offenbarung der Erfindung

Vor diesem Hintergrund werden mit dem hier vorgestellten Ansatz ein Verfahren zum Regeln eines Schlupfs zumindest eines Rads eines Fahrzeugs und ein entsprechendes Steuergerät, sowie schließlich ein entsprechendes Computerprogrammprodukt und ein maschinenlesbares Speichermedium gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung können in vorteilhafter Weise ermöglichen, einen Berechnungsaufwand während eines Eingriffs einer Antriebsschlupfregelung eines Fahrzeugs zu reduzieren. Somit kann die Antriebsschlupfregelung mit einer kurzen Reaktionszeit ansprechen.

Es wird ein Verfahren zum Regeln eines Schlupfs zumindest eines Rads eines Fahrzeugs vorgeschlagen, wobei unter Verwendung eines Schlupfzustands (State) des Rads zumindest ein Parameter einer auszuführenden Aktion (Action) aus einer Matrix ausgelesen wird, wenn der Schlupfzustand außerhalb eines Zielschlupfbereichs der Matrix liegt, wobei zum Auslesen ein dem Schlupfzustand zugeordnetes Datenfeld der Matrix bestimmt wird und der zumindest eine Parameter aus dem Datenfeld ausgelesen wird, wobei zum Ausführen der Aktion zumindest ein Aktor des Fahrzeugs unter Verwendung des Parameters angesteuert wird, wobei für den Schlupfzustand ein Wertepaar aus einem Relativgeschwindigkeitswert des Rads und einem Relativbeschleunigungswert des Rads gebildet wird, wobei der Relativgeschwindigkeitswert eine Differenzgeschwindigkeit zwischen dem Rad und einem Untergrund repräsentiert.

Ideen zu Ausführungsformen der vorliegenden Erfindung können unter anderem als auf den nachfolgend beschriebenen Gedanken und Erkenntnissen beruhend angesehen werden.

Ein Schlupfzustand kann einen momentanen Zustand eines Schlupfs an einem Rad eines Fahrzeugs beschreiben. Der Schlupfzustand kann am Rad unter Verwendung zumindest eines Sensors erfasst werden. Der Schlupfzustand kann auch für eine Achse des Fahrzeugs bestimmt werden. Dann kann der Schlupfzustand durch zumindest einen Sensor pro Rad der Achse erfasst werden. Sensorsignale der Sensoren können zusammengeführt werden, um den Schlupfzustand zu bestimmen.

Eine Matrix kann eine Tabelle sein. Die Matrix kann eine Vielzahl von Datenfeldern aufweisen. Ein Datenfeld kann einen Parameter oder auch eine Vielzahl an Parametern enthalten. Eine Koordinate eines Datenfelds der Matrix kann einem Zahlenwert des Schlupfzustands zugeordnet sein. Ein Parameter kann ein Skalierungswert beziehungsweise ein Skalierungsfaktor sein. In dem Datenfeld kann eine auszuführende Aktion hinterlegt sein. Ein Aktor kann ein Bremssystem des Fahrzeugs sein. Der Aktor kann auch ein Antriebssystem des Fahrzeugs sein. Das Bremssystem kann dabei radindividuell angesteuert werden. Das Antriebssystem kann im Regelfall achsindividuell oder bei entsprechender Möglichkeit auch radindividuell angesteuert werden. Zum Ansteuern des Aktors kann der Parameter in ein Steuersignal umgewandelt oder auf das Steuersignal aufmoduliert werden. Ein Zielschlupfbereich kann ein Teilbereich der Matrix sein. Der Zielschlupfbereich kann mehrere Datenfelder der Matrix umfassen. Im Zielschlupfbereich können die Datenfelder leer sein.

Für den Schlupfzustand kann ein Wertepaar aus einem Relativgeschwindigkeitswert des Rads und einem Relativbeschleunigungswert des Rads gebildet werden. Zahlenwerte des Wertepaars können der Koordinate des auszuwählenden Datenfelds entsprechen. Ein Relativgeschwindigkeitswert kann eine Schlupfgeschwindigkeit des Rads repräsentieren. Die Schlupfgeschwindigkeit kann eine Differenzgeschwindigkeit zwischen dem Rad und dem Untergrund sein. Ein Relativbeschleunigungswert kann eine Schlupfbeschleunigung des Rads repräsentieren. Die Schlupfbeschleunigung kann eine Änderung der Schlupfgeschwindigkeit sein. Die Schlupfgeschwindigkeit und die Schlupfbeschleunigung können durch Sensoren und eine Referenzgeschwindigkeit des Fahrzeugs bestimmt werden. Die Referenzgeschwindigkeit kann als Wert im Fahrzeug verfügbar sein.

Der Relativbeschleunigungswert kann unter Verwendung eines Verlaufs des Relativgeschwindigkeitswerts des Rads ermittelt werden. Die Schlupfbeschleunigung kann eine Steigung des Verlaufs sein. Die Schlupfbeschleunigung kann aus der Schlupfgeschwindigkeit abgeleitet werden. Durch die Ableitung ist nur ein Sensor am Rad erforderlich.

Der Relativgeschwindigkeitswert kann unter Verwendung eines Radgeschwindigkeitswerts des Rads und eines weiteren Radgeschwindigkeitswerts eines weiteren Rads an einer Achse des Rads bestimmt werden. Ein Radgeschwindigkeitswert kann eine Radgeschwindigkeit des Rads repräsentieren. Die Radgeschwindigkeit kann durch einen einfachen und zuverlässigen Sensor am Rad erfasst werden. Beispielsweise kann ein Raddrehzahlsensor am Rad zum Erfassen der Radgeschwindigkeit verwendet werden. Die Schlupfgeschwindigkeit kann eine Geschwindigkeitsdifferenz zwischen der Radgeschwindigkeit und der Radgeschwindigkeit des anderen Rads an der Achse sein.

Die anzusteuernde Aktion kann unter Verwendung des Schlupfzustands ausgewählt werden. Insbesondere kann die anzusteuernde Aktion von einer momentanen Änderung des Schlupfzustands abhängig sein. Unterschiedliche Aktionen können erforderlich sein, um den Schlupfzustand in den Zielschlupfbereich zu bringen. Beispielsweise kann das Rad beim Blockieren beschleunigt werden. Das kann beispielsweise durch eine Vergrößerung eines Antriebsmoments oder eine Reduktion eines Bremsmoments erfolgen. Beim Durchdrehen kann umgekehrt das Antriebsmoment verringert werden oder das Bremsmoment vergrößert werden.

Wenn der momentane Schlupfzustand statisch ist, kann eine andere Aktion erforderlich sein, als wenn sich der momentane Schlupfzustand dynamisch ändert.

Unterschiedliche Aktionen können in den Datenfeldern der Matrix hinterlegt sein. Die anzusteuernde Aktion kann aus dem Datenfeld ausgelesen werden, das dem Schlupfzustand zugeordnet ist. An einem Übergang von einem Schlupfzustand zu einem anderen Schlupfzustand können benachbarte Datenfelder unterschiedlichen Aktionen zugeordnet sein.

Ein erster Wert eines den Schlupfzustand kennzeichnenden Wertepaars kann mit einem Zeilenwertebereich des Zielschlupfbereichs verglichen werden, um einen Zeilenbereich des Schlupfzustands in der Matrix zu bestimmen. Dabei kann ein oberer Zeilenbereich bestimmt werden, wenn der erste Wert größer als der Zeilenwertebereich ist. Ein mittlerer Zeilenbereich kann bestimmt werden, wenn der erste Wert innerhalb des Zeilenwertebereichs liegt. Ein unterer Zeilenbereich kann bestimmt werden, wenn der erste Wert kleiner als der Zeilenwertebereich ist.

Ein zweiter Wert des Wertepaars kann mit einem Spaltenwertebereich des Zielschlupfbereichs verglichen werden, um einen Spaltenbereich des Schlupfzustands in der Matrix zu bestimmen. Dabei kann ein rechter Spaltenbereich bestimmt werden, wenn der zweite Wert größer als der Spaltenwertebereich ist. Ein mittlerer Spaltenbereich kann bestimmt werden, wenn der zweite Wert innerhalb des Spaltenwertebereichs liegt. Ein linker Spaltenbereich kann bestimmt werden, wenn der zweite Wert kleiner als der Spaltenwertebereich ist.

Der bestimmte Zeilenbereich und der bestimmte Spaltenbereich können einen von acht möglichen Matrixteilbereichen der Matrix rund um den Zielbereich kennzeichnen. Die anzusteuernde Aktion kann unter Verwendung des gekennzeichneten Matrixteilbereichs ausgewählt werden. Die verschiedenen Matrixteilbereiche können unterschiedlichen Schlupfzustandsbereichen zugeordnet sein. An Übergängen zwischen Matrixteilbereichen können Übergänge zwischen unterschiedlichen hinterlegten Aktionen angeordnet sein.

Eine Abweichung eines zeitlich nach dem Ausführen der Aktion erfassten nachfolgenden Schlupfzustands von dem Zielschlupfbereich kann ermittelt werden.

Unter Verwendung der Abweichung kann ein Korrekturfaktor für den Parameter bestimmt werden. Der Korrekturfaktor kann in dem Datenfeld hinterlegt werden. Wenn eine Aktion mit dem zumindest einen in dem Datenfeld hinterlegten Parameter ausgeführt wird, sollte der zeitlich nachfolgend erfasste Schlupfzustand den Zielschlupfbereich erreichen beziehungsweise sich in die richtige Richtung verändern. Wenn der Schlupfzustand den Zielschlupfbereich nicht erreicht beziehungsweise sich in die falsche Richtung verändert, kann der Parameter für dieses Fahrzeug unpassend sein. Ein Korrekturfaktor kann den Parameter so verändern, dass in einem nachfolgenden Zyklus zumindest eine Verbesserung erreicht werden kann. Wenn im nachfolgenden Zyklus eine Verschlechterung erreicht wird, kann ein Vorzeichen des Korrekturfaktors geändert werden. Durch Korrekturfaktoren kann sich die Antriebsschlupfregelung vollautomatisch optimieren.

Das Verfahren kann beispielsweise in Software oder Hardware oder in einer Mischform aus Software und Hardware beispielsweise in einem Steuergerät implementiert sein.

Der hier vorgestellte Ansatz schafft ferner ein Steuergerät, das dazu ausgebildet ist, um die Schritte einer Variante des hier vorgestellten Verfahrens in entsprechenden Einrichtungen durchzuführen, anzusteuern bzw. umzusetzen.

Das Steuergerät kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale des Steuergeräts und des Verfahrens in geeigneter Weise kombiniert, angepasst oder ausgetauscht werden können, um zu weiteren Ausführungsformen der Erfindung zu gelangen.

### Kurze Beschreibung der Zeichnung

Nachfolgend werden Ausführungsformen der Erfindung unter Bezugnahme auf die beigefügte Zeichnung beschrieben, wobei weder die Zeichnung noch die Beschreibung als die Erfindung einschränkend auszulegen sind.
Fig. 1 zeigt eine Darstellung eines Fahrzeugs mit einem Steuergerät gemäß einem Ausführungsbeispiel;
Fig. 2 zeigt eine Darstellung eines Verlaufs eines Schlupfzustands; und
Fig. 3 zeigt eine Prinzipskizze einer Antriebsschlupfregelung gemäß einem Ausführungsbeispiel.

Die Figur ist lediglich schematisch und nicht maßstabsgetreu. Gleiche Bezugszeichen bezeichnen gleiche oder gleichwirkende Merkmale.

### Ausführungsformen der Erfindung

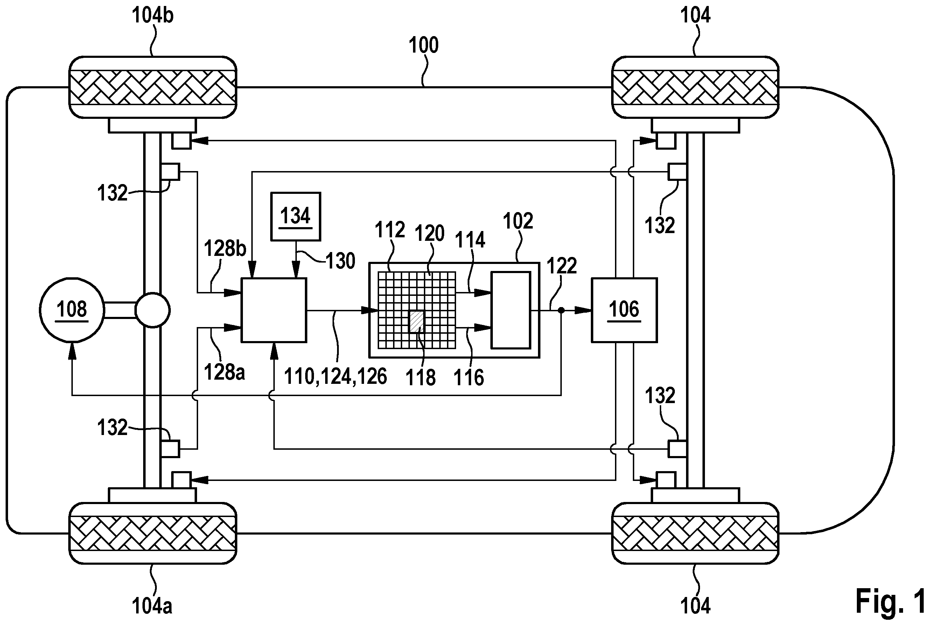

Fig. 1 zeigt eine Darstellung eines Fahrzeugs 100 mit einem Steuergerät 102 gemäß einem Ausführungsbeispiel. Das Steuergerät 102 ist dazu ausgebildet, einen Schlupf an Rädern 104 des Fahrzeugs 100 zu regeln. Das Steuergerät 102 ist insbesondere dazu ausgebildet, einen Antriebsschlupf an angetriebenen Rädern 104 des Fahrzeugs 100 zu regeln. Das Steuergerät 102 kann auch dazu verwendet werden, um einen Bremsschlupf an den angetriebenen Rädern 104 und nicht angetriebenen Rädern des Fahrzeugs 100 zu regeln. Das Steuergerät 102 ist mit einem auf die Räder 104 wirkenden Bremssystem 106 des Fahrzeugs 100 verbunden. Das Steuergerät 102 ist ebenso mit einem auf die angetriebenen Räder 104 wirkenden Antriebssystem 108 des Fahrzeugs 100 verbunden.

Das Steuergerät 102 liest einen Schlupfzustand 110 pro Rad 104 oder pro Achse ein. Unter Verwendung des Schlupfzustands 110 wird im Steuergerät aus einer Matrix 112 zumindest ein Parameter 114 einer auszuführenden Aktion 116 ausgelesen, wenn der Schlupfzustand 110 außerhalb eines Zielschlupfbereichs 118 der Matrix 112 liegt. Zum Bestimmen, ob der Schlupfzustand 110 außerhalb des Zielschlupfbereichs 118 liegt, wird ein dem Schlupfzustand 110 zugeordnetes Datenfeld 120 der Matrix 112 bestimmt und der Parameter 114 aus dem Datenfeld 120 ausgelesen, wenn das Datenfeld 120 außerhalb des Zielschlupfbereichs 118 liegt. Wenn das dem Schlupfzustand 110 zugeordnete Datenfeld 120 innerhalb des Zielschlupfbereichs 118 liegt, wird das Datenfeld 120 nicht ausgelesen, da der Schlupfzustand 110 sich dann nicht ändern soll.

Zum Ausführen der Aktion 116 wird unter Verwendung des Parameters 114 ein Steuersignal 122 für das Bremssystem 106 und/oder das Antriebssystem 108 generiert. Wenn das Rad 104, dessen Schlupfzustand 110 betrachtet wird, aktuell einen zu großen Schlupf aufweist, wird durch die Aktion 116 ein auf das Rad 104 wirkendes Moment reduziert. Der Parameter 114 gibt dabei vor, um wie viel das Moment reduziert wird.

Bei einem zu großen Bremsmoment kann als Aktion 116 ein von dem Bremssystem 106 aufgebrachter Bremsdruck an dem Rad 104 reduziert werden. Der Parameter 114 repräsentiert dabei, um wieviel der Bremsdruck reduziert wird. Alternativ oder ergänzend kann als Aktion 116 durch das Antriebssystem 108 ein dem Bremsmoment entgegenwirkendes Antriebsmoment an dem Rad 104 oder der Achse erzeugt oder erhöht werden. Der Parameter 114 repräsentiert dabei, um wieviel das Antriebsmoment erhöht wird.

Wenn das Bremsmoment zu klein ist, kann als Aktion 116 ein von dem Bremssystem 106 aufgebrachter Bremsdruck an dem Rad 104 erhöht werden. Der Parameter 114 repräsentiert dabei, um wieviel der Bremsdruck erhöht wird.

Bei einem zu großen Antriebsmoment kann als Aktion 116 eine von dem Antriebssystem 108 an das Rad 104 oder die Achse abgegebene Leistung reduziert werden. Der Parameter 114 repräsentiert dabei, um wieviel das Antriebsmoment reduziert werden soll. Alternativ oder ergänzend kann als Aktion 116 durch das Bremssystem 106 ein dem Antriebsmoment entgegenwirkendes Bremsmoment an dem Rad 104 erzeugt werden. Der Parameter 114 repräsentiert dabei, um wieviel das Bremsmoment erhöht wird.

Wenn das Antriebsmoment zu klein ist, kann als Aktion 116 eine von dem Antriebssystem 108 an das Rad 104 oder die Achse abgegebene Leistung erhöht werden. Der Parameter 114 repräsentiert dabei, um wieviel das Antriebsmoment erhöht wird.

Der Schlupfzustand 110 des Rads 104 wird anschließend an die Aktion 116 erneut eingelesen und aus der Matrix 112 ein entsprechender Parameter 114 für eine nachfolgende Aktion 116 ausgelesen, wenn der Schlupfzustand 110 weiterhin außerhalb des Zielschlupfbereichs 118 liegt. Die nachfolgende Aktion 116 wird durch ein neues Steuersignal 122 für das Bremssystem 106 und/oder das Antriebssystem 108 angesteuert.

In einem Ausführungsbeispiel wird beim anschließenden erneuten Einlesen des Schlupfzustands 110 ein Erfolg der zuvor ausgeführten Aktion 116 überprüft.

Insbesondere wird überprüft, ob der Parameter 114 zu einer gewünschten Verbesserung des Schlupfzustands 110 geführt hat. Wenn die Verbesserung zu gering ist, wird der zuvor verwendete Parameter 114 und/oder die Aktion 116 verändert. Die Veränderung des Parameters 114 kann dabei abhängig von einer Differenz des Schlupfzustands 110 von gewünschten Schlupfzuständen des Zielschlupfbereichs 118 erfolgen.

In einem Ausführungsbeispiel ist der Schlupfzustand 110 zweidimensional und setzt sich aus einem Relativgeschwindigkeitswert 124 des Rads 104 und einem Relativbeschleunigungswert 126 des Rads 104 zusammen.

In einem Ausführungsbeispiel repräsentiert der Relativgeschwindigkeitswert 124 eine Differenz zwischen einem Radgeschwindigkeitswert 128 des Rads 104 und einem Referenzgeschwindigkeitswert 130 des Fahrzeugs 100. Der Radgeschwindigkeitswert 128 wird am Rad 104 von einem Radgeschwindigkeitssensor 132 des Fahrzeugs 100 erfasst. Der Referenzgeschwindigkeitswert 130 wird von einem Zustandsschätzer 134 des Fahrzeugs 100 laufend aktualisiert.

In einem Ausführungsbeispiel repräsentiert der Relativgeschwindigkeitswert 124 eine Differenz zwischen einem linken Radgeschwindigkeitswert 128a des linken Rads 104a der Achse und einem rechten Radgeschwindigkeitswert 128b des rechten Rads 104b der Achse.

In einem Ausführungsbeispiel sind unterschiedlichen Datenfeldern 120 unterschiedliche Aktionen 116 zugeordnet. Dabei werden die auszuführende Aktion 116 und der zugehörige Parameter 114 in Abhängigkeit von dem eingelesenen Schlupfzustand 110 aus der Matrix 112 ausgelesen.

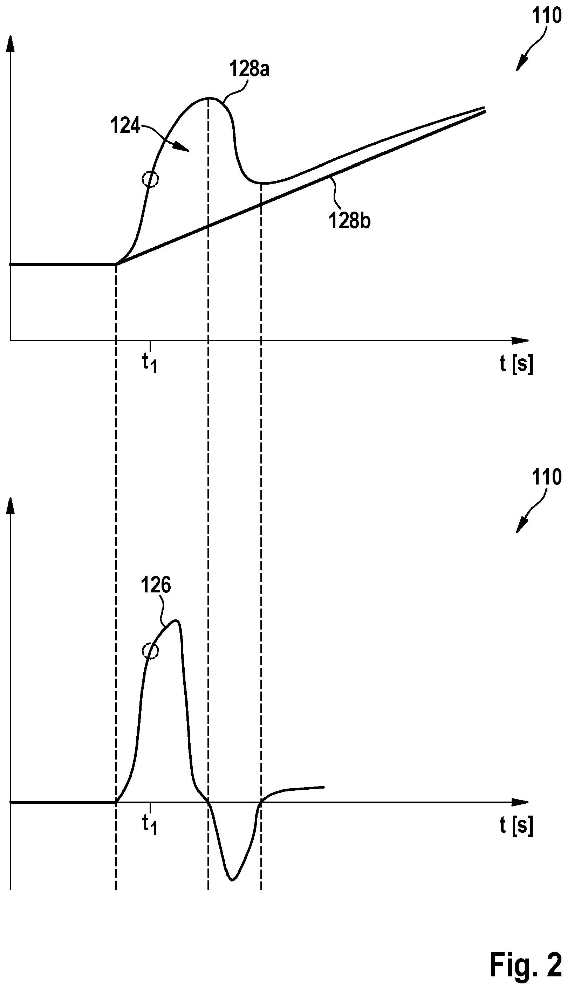

Fig. 2 zeigt eine Darstellung eines zeitlichen Verlaufs eines Schlupfzustands 110. Der Schlupfzustand 110 ist zweidimensional und ist in zwei zeitlich korrelierten Diagrammen übereinander dargestellt. Beide Diagramme haben auf der Abszisse die Zeit t in Sekunden aufgetragen. Das obere Diagramm hat auf der Ordinate eine Geschwindigkeit in m/s aufgetragen. Das untere Diagramm hat auf der Ordinate eine Beschleunigung in m/s² aufgetragen. Im oberen Diagramm sind Verläufe von Radgeschwindigkeitswerten 128a, 128b dargestellt. Im unteren Diagramm ist ein Verlauf eines Relativbeschleunigungswerts 126 dargestellt.

Am Anfang der Verläufe fährt das Fahrzeug mit einer konstanten Geschwindigkeit. Dann beschleunigt das Fahrzeug und die rechte Radgeschwindigkeit 128b steigt mit einer konstanten Steigung an. Das linke Rad verliert an Haftung und beginnt durchzudrehen. Der linke Radgeschwindigkeitswert 128a steigt mit einer wesentlich größeren Steigung an als der rechte Radgeschwindigkeitswert 128b. Eine Differenz zwischen dem linken Radgeschwindigkeitswert 128a und dem rechten Radgeschwindigkeitswert 128b ist der Relativgeschwindigkeitswert 124. Der Relativgeschwindigkeitswert 124 nimmt rasant zu, nachdem das linke Rad die Haftung verliert. Diese rasante Zunahme ist auch im Verlauf des Relativbeschleunigungswerts 126 abgebildet, da der Relativbeschleunigungswert 126 die Ableitung des Relativgeschwindigkeitswerts 124 nach der Zeit t ist. Mit dem Haftungsverlust steigt der Relativbeschleunigungswert 126 ebenfalls rasant von null an. An einem ersten Wendepunkt des Verlaufs des Relativgeschwindigkeitswerts 124 weist der Verlauf des Relativbeschleunigungswerts 126 ein Maximum auf. Ein Maximum des Verlaufs des Relativgeschwindigkeitswerts 124 ist erreicht, wenn der linke Radgeschwindigkeitswert 128a ebenfalls ein Maximum erreicht. An dem Maximum weist der Verlauf des Relativbeschleunigungswerts 126 einen Nulldurchgang auf. Nach dem Nulldurchgang weist der Verlauf des Relativbeschleunigungswerts 126 ein Minimum an einem zweiten Wendepunkt des Verlaufs des Relativgeschwindigkeitswerts 124 auf.

Ein Zeitpunkt t1 ist vor Erreichen des ersten Wendepunkts des Verlaufs des Relativgeschwindigkeitswerts 124 eingetragen. Damit hat der Verlauf des Relativbeschleunigungswerts 126 zum Zeitpunkt t1 sein Maximum noch nicht erreicht.

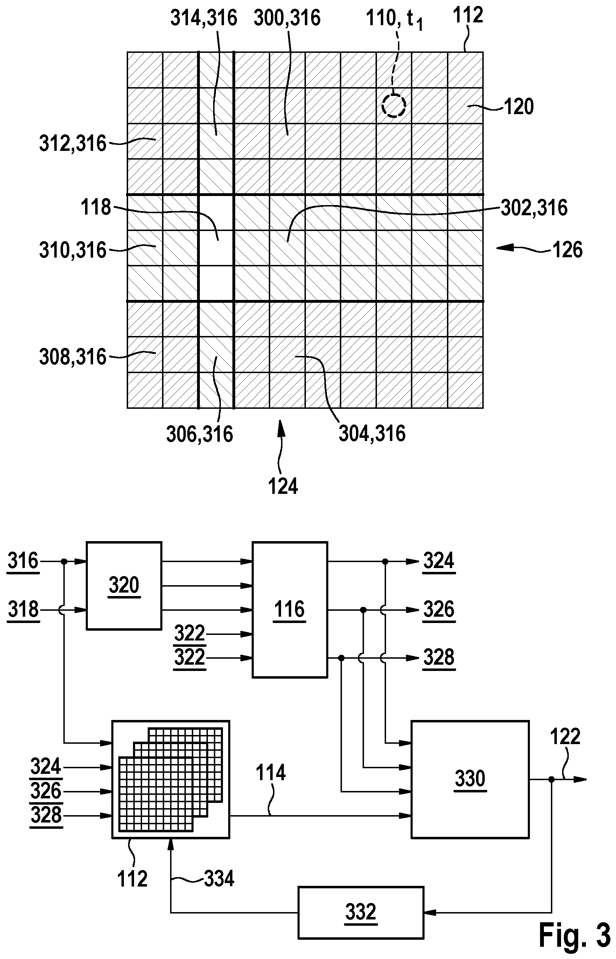

Fig. 3 zeigt eine Prinzipskizze einer Antriebsschlupfregelung gemäß einem Ausführungsbeispiel. Die Antischlupfregelung kann beispielsweise in einem Steuergerät, wie es in Fig. 1 dargestellt ist, ausgeführt werden. Ein zweidimensionaler Schlupfzustand 110 zum Zeitpunkt t1 aus Fig. 2 ist in der Matrix 112 hervorgehoben. Die Datenfelder 120 der Matrix 112 sind alle unterschiedlichen Schlupfzuständen 110 zugeordnet. Von links nach rechts sind die Datenfelder 120 ansteigenden Relativgeschwindigkeitswerten 124 zugeordnet. Von unten nach oben sind die Datenfelder 120 ansteigenden Relativbeschleunigungswerten 126 zugeordnet. Der Zielschlupfbereich 118 ist ebenfalls in der Matrix 112 dargestellt. Der Zielschlupfbereich 118 umfasst hier drei Datenfelder 120 der Matrix.

In der Matrix 112 sind zusätzlich zum Zielschlupfbereich 118 acht Matrixteilbereiche 300, 302, 304, 306, 308, 310, 312, 314 dargestellt. Im ersten Matrixteilbereich 300 sind die Datenfelder 120 größeren Relativgeschwindigkeitswerten 124 und größeren Relativbeschleunigungswerten 126 zugeordnet, als die Datenfelder 120 im Zielschlupfbereich 118. Im zweiten Matrixteilbereich 302 sind die Datenfelder 120 größeren Relativgeschwindigkeitswerten 124 und gleichen Relativbeschleunigungswerten 126 zugeordnet, als die Datenfelder 120 im Zielschlupfbereich 118. Im dritten Matrixteilbereich 304 sind die Datenfelder 120 größeren Relativgeschwindigkeitswerten 124 und kleineren Relativbeschleunigungswerten 126 zugeordnet, als die Datenfelder 120 im Zielschlupfbereich 118. Im vierten Matrixteilbereich 306 sind die Datenfelder 120 gleichen Relativgeschwindigkeitswerten 124 und kleineren Relativbeschleunigungswerten 126 zugeordnet, als die Datenfelder 120 im Zielschlupfbereich 118. Im fünften Matrixteilbereich 308 sind die Datenfelder 120 kleineren Relativgeschwindigkeitswerten 124 und kleineren Relativbeschleunigungswerten 126 zugeordnet, als die Datenfelder 120 im Zielschlupfbereich 118. Im sechsten Matrixteilbereich 300 sind die Datenfelder 120 kleineren Relativgeschwindigkeitswerten 124 und gleichen Relativbeschleunigungswerten 126 zugeordnet, als die Datenfelder 120 im Zielschlupfbereich 118. Im siebten Matrixteilbereich 300 sind die Datenfelder 120 kleineren Relativgeschwindigkeitswerten 124 und größeren Relativbeschleunigungswerten 126 zugeordnet, als die Datenfelder 120 im Zielschlupfbereich 118. Im achten Matrixteilbereich 300 sind die Datenfelder 120 gleichen Relativgeschwindigkeitswerten 124 und größeren Relativbeschleunigungswerten 126 zugeordnet, als die Datenfelder 120 im Zielschlupfbereich 118.

Das dem Schlupfzustand 110 zum Zeitpunkt t1 zugeordnete Datenfeld 120 liegt im ersten Matrixteilbereich 300. Im Zielschlupfbereich 118 liegen die gewünschten Schlupfzustände. Die acht Matrixteilbereiche 300, 302, 304, 306, 308, 310, 312, 314 repräsentieren einen statischen Teil 316 der hier vorgestellten Antriebsschlupfregelung.

Veränderungen des Schlupfzustands 110 von Durchlauf zu Durchlauf können durch Logik beschrieben werden und repräsentieren einen dynamischen Teil 318 der hier vorgestellten Antriebsschlupfregelung.

Unter Verwendung des statischen Teils 316 und des dynamischen Teils 318 wird ein grundlegender Aktionstyp 320 bestimmt. Unter Verwendung des grundlegenden Aktionstyps 320 und weiterer Einflussgrößen 322 wird ein funktionaler Aktionstyp beziehungsweise die Aktion 116 bestimmt. Die Aktion 116 kann drei Zustände 324, 326, 328 aufweisen. Der erste Zustand 324 ist Beschleunigen. Der zweite Zustand 326 ist Abbremsen. Der dritte Zustand 328 ist Halten.

Unter Verwendung der Aktion 116 und des statischen Teils 316 wird ein Parameter 114 aus der zum jeweiligen Zustand 324, 326, 328 der Aktion 116 zugehörigen Matrix 112 ausgelesen. Die Aktion 116 und der Parameter 114 werden in einem Aktorsteuergerät 330 verwendet, um ein Steuersignal 122 für das Bremssystem und/oder das Antriebssystem zu generieren.

In einem Ausführungsbeispiel wird ein Ergebnis des Ansteuerns in einem Lernalgorithmus 332 ausgewertet und Korrekturfaktoren 334 für die in den Datenfeldern 120 hinterlegten Parameter 114 erstellt, um die Antriebsschlupfregelung vollautomatisch zu optimieren.

Nachfolgend werden mögliche Ausführungsformen und Ausgestaltungen der hierin vorgestellten Kontaktstellen nochmals mit anderen Worten beschrieben.

Es wird eine State-Action basierte Antriebsschlupfregelung vorgestellt.

Die Antriebsschlupfregelung (Traction Control System, TCS) ist ein Funktionsbaustein eines ESP Systems. Eine Kernfunktionalität der Antriebsschlupfregelung besteht darin, dass die Räder beim longitudinalen Anfahren eines Fahrzeugs nicht durchdrehen und somit Fahrzeug-Anforderungen hinsichtlich Stabilität, Lenkbarkeit und Traktion erfüllt werden.

Bei einer herkömmlichen Antriebsschlupfregelung existiert eine Abhängigkeit von physikalischen Modellierungsgrößen des Antriebsstrangs (Powertrain) sowie von einer Geschwindigkeitsreferenz. Die Geschwindigkeitsreferenz ist dabei eine Schätzgröße aus einer externen Funktion. Der Regler der herkömmlichen Antriebsschlupfregelung liefert Sollwertvorgaben, die in Aktuator-Stellgrößen umgerechnet werden.

Die herkömmliche Antriebsschlupfregelung ist ein komplexes System und erfordert ca. zwei Jahre Aufwand, um das System umfänglich zu verstehen. Die herkömmliche Antriebsschlupfregelung weist aufgrund einer große Variantenzahl (>50 Varianten in einem Projekt) einen hohen Applikationsaufwand mit Projektlaufzeiten von ein bis zwei Jahren auf. Die herkömmliche Antriebsschlupfregelung benötigt eine Schätzung des auf die Räder wirkenden Antriebsmoments sowie eine möglichst genaue Geschwindigkeitsreferenz.

Bei dem herkömmlichen System wird als Basis das wirkende Antriebsmoment an den Achsen und Rädern in der physikalischen Einheit Newtonmeter (Nm) herangezogen. Dieses Moment wird auf Grundlage eines Powertrain-Modells mithilfe von Größen wie der Motordrehzahl und den Radgeschwindigkeiten modelliert. Im Einregelfall der herkömmlichen Antriebsschlupfregelung werden optimale Antriebsschlüpfe berechnet, welche ideale Moment- Sollwertvorgaben für den Motor bzw. Bremsmomentvorgaben für das Bremssystem liefern. Die Bremsmomentvorgaben werden anschließend in Bremsdruck rücktransformiert. Sobald beispielsweise bei einer suboptimalen Applikation auf die jeweilige Fahrzeugvariante die Antriebsmomentschätzung nicht richtig funktioniert oder die externe Funktion der Geschwindigkeitsreferenz nicht akkurat ist, verringert sich die Performance bzw. Genauigkeit.

Bei der Applikation des herkömmlichen Systems existieren ca. 500 Verstellparameter, die das System direkt oder indirekt beeinflussen. Eine Verinnerlichung eines Zusammenspiels zwischen Parameter und System ist erforderlich, um die Funktion funktionsgerecht zu applizieren. Dies erfordert einen hohen Zeitaufwand.

Bei dem herkömmlichen System ist jegliches im System verbautes Knowhow fast ausschließlich spezifisch für die Antriebsschlupfregelung. Ein für die herkömmliche Antriebsschlupfregelung ausgebildeter Funktionsentwickler, Softwareentwickler oder Applikateur kann nicht einfach bei einer anderen Funktion (z.B. ABS oder VDC) aushelfen.

Bei dem hier vorgestellten Ansatz ist die Beschreibung des Systems anhand von physikalisch- quantitativen Modellgrößen nicht mehr von so zentraler Bedeutung. Bei dem hier vorgestellten Ansatz reicht eine korrekte Triggerung. Der hier vorgestellte Ansatz beschreibt ein intuitives System mit wenig Applikationsaufwand und einer niedrigen Variantenzahl.

Solange die Triggerung der Antriebsschlupfregelung korrekt funktioniert, gibt es keine Performance- Einbußen. Aufgrund des State-Action-Prinzips ist der "State" rein messtechnisch auf Sensoren basiert und die "Action" wirkt direkt an den jeweiligen Aktuatoren Motor bzw. Bremssystem.

Die Reglerparameter der hier vorgestellten Antriebsschlupfregelung sind Skalierungswerte, welche die Aktuatoren Motor und Bremssystem auf explizite Weise über Absolutwerte und/oder implizite Weise über Delta-Werte beeinflussen. Anhand von Lernalgorithmen werden diese Parameterwerte vollautomatisch gelernt, indem die gängigsten Antriebsschlupfregelungsmanöver entsprechend eines vorgegebenen Manöverkatalogs abgefahren werden. Dadurch besteht ein direkter Zusammenhang der Parameterwerte zum "State", d.h. zum Rad- und Achsverhalten des Fahrzeugs. Dadurch kann der Appliakteur im Nachgang auf relativ eingängige Weise beziehungsweise intuitiv eine individuelle Nachapplikation vornehmen.

Der hier vorgestellte Ansatz beschreibt ein intuitives System. Der Regler wird neu "gedacht". Es wird nicht versucht, eine hochkomplexe Realität über eine Modellierung des Fahrzeugs, der Reifen und der Umgebung zu beschreiben und regelungstechnisch zu kontrollieren. Vielmehr wird von vorneherein die Prämisse gesetzt, das hochkomplexe System weder beschreiben zu können noch zu wollen. Der Ansatz ist auf die Messgrößen von Sensoren sowie die Stellglieder beziehungsweise Aktuatoren beschränkt. Alles dazwischen ist ein generischer Denkansatz.

Für das Systemverständnis genügt bei dem hier vorgestellten Ansatz die Kenntnis über die Definition des "States" sowie das grundlegende Regelungsziel des Antriebsschlupfregelungssystems. Für das Applizieren der Antriebsschlupfregelungsfunktion ist kein spezielles Knowhow erforderlich, da die Softwarestruktur dieses Knowhow auf generische Weise im Funktionskern beinhaltet und keiner weiteren Änderung oder Anpassung bedarf. Das bedeutet auch, dass ein Verständnis bezüglich der Software und der Funktion der Antriebsschlupfregelung problemlos auf weitere Funktionen wie z.B. ABS oder VDC übertragbar ist.

Bei dem hier vorgestellten State-Action-Prinzip beschreibt ein "State" einen Zustand, auf dessen Basis aufgrund einer Zustandsänderung des Zustands eine Aktion
ausgeführt wird. Die "Action" beschreibt eine direkte Einflussnahme auf den Aktuator, also den Motor und/oder das Bremssystem.

Die möglichen "States" und des Zielbereichs sind in einer Tabelle hinterlegt. Auf der X-Achse der Tabelle ist der Geschwindigkeitsschlupf eines Rads oder einer Achse aufgetragen. Auf der Y-Achse der Tabelle ist die Beschleunigung des Rads oder der Achse aufgetragen.

Im Folgenden wird ein Signalfluss des hier vorgestellten Ansatzes beschrieben. Informationen über eine Geschwindigkeit und Beschleunigung werden von einem Radgeschwindigkeitssensor (Wheel Speed Sensor) eingelesen und in einer Signalbearbeitung verarbeitet. Der "State" anhand der prozessierten Signale bestimmt. Dabei erfolgt eine Ermittlung der Statik und Dynamik des "States". Eine Bestimmung eines Aktions-Typen, beispielsweise eines Druckaufbaus oder einer Momentenreduktion erfolgt via eine interne Logik. Basierend auf dem Aktionstyp erfolgt das Stellen der Aktuatorgrößen. Die resultierenden Aktuator-Stellverläufe sind charakteristisch für das State-Action-Prinzip.

Bei dem hier vorgestellten Ansatz wird während der Applikation der Lernalgorithmus aktiviert. Dabei werden Parametertabellen upgedated. War eine Aktion gut, erfolgt keine Änderung. War die Aktion schlecht, erfolgt eine Parametervariierung.

In Serie ist der Lernalgorithmus deaktiviert. Dabei wird der Parameter aus der Tabelle ausgelesen und der Aktuator gestellt. Alternativ ist auch ein Lernen in der Serie möglich.

Das Rad bzw. die Achse wird so geregelt, dass das System den State in einem Regelziel, der sogenannten Target-Zone hält. Dadurch sind ein gewünschter Schlupf sowie eine gewünschte Beschleunigung einstellbar. So kann eine optimale Traktion unabhängig von der Geschwindigkeitsreferenz erreicht werden.

Der Geschwindigkeitsschlupf repräsentiert eine Differenz zwischen der Geschwindigkeit des abreißenden Rads (bzw. Achse) und der Referenzgeschwindigkeit.

Dabei kann als Referenzgeschwindigkeit dieselbe Referenzgeschwindigkeit wie beim herkömmlichen System verwendet werden. Die Referenzgeschwindigkeit ist eine externe Funktion einer Fahrzeugstatusschätzung (Vehicle State Estimation, VSE). Alternativ kann jedoch auch eine eigene (einfache) Referenzlogik implementiert werden, da für das State-Action-Prinzip die quantitative Beschreibung nicht mehr im Fokus steht. Die Referenzgeschwindigkeit ist bei dem hier vorgestellten Ansatz vor allem für die korrekte Triggerung eines Antriebsschlupfregelungsfalls relevant. Der hier vorgestellte Ansatz kann als "slipfree" bezeichnet werden, da keine so akkurate Geschwindigkeitsreferenz wie beim Stand der Technik vonnöten ist.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Regeln eines Schlupfs zumindest eines Rads (104) eines Fahrzeugs (100), wobei unter Verwendung eines Schlupfzustands (110) des Rads (104) zumindest ein Parameter (114) einer auszuführenden Aktion (116) aus einer Matrix (112) ausgelesen wird, wenn der Schlupfzustand (110) außerhalb eines Zielschlupfbereichs (118) der Matrix (112) liegt, wobei zum Auslesen ein dem Schlupfzustand (110) zugeordnetes Datenfeld (120) der Matrix (112) bestimmt wird und der zumindest eine Parameter (114) aus dem Datenfeld (120) ausgelesen wird, wobei zum Ausführen der Aktion (116) zumindest ein Aktor (106, 108) des Fahrzeugs (100) unter Verwendung des Parameters (114) angesteuert wird, **dadurch gekennzeichnet, dass** für den Schlupfzustand (110) ein Wertepaar aus einem Relativgeschwindigkeitswert (124) des Rads (104) und einem Relativbeschleunigungswert (126) des Rads (104) gebildet wird, wobei der Relativgeschwindigkeitswert (124) eine Differenzgeschwindigkeit zwischen dem Rad (104) und einem Untergrund repräsentiert.

2. Verfahren gemäß Anspruch 1, bei dem der Relativbeschleunigungswert (126) unter Verwendung eines Verlaufs des Relativgeschwindigkeitswerts (124) ermittelt wird.

3. Verfahren gemäß einem der vorhergehenden Ansprüche, bei dem der Relativgeschwindigkeitswert (124) unter Verwendung eines Radgeschwindigkeitswerts (128a) des Rads (104a) und eines weiteren Radgeschwindigkeitswerts (128b) eines weiteren Rads (104b) an einer Achse des Rads (104a) bestimmt wird.

4. Verfahren gemäß einem der vorhergehenden Ansprüche, bei dem ferner die anzusteuernde Aktion (116) unter Verwendung des Schlupfzustands (110) ausgewählt wird.

5. Verfahren gemäß Anspruch 4, bei dem unterschiedliche Aktionen (116) in den Datenfeldern (120) der Matrix (112) hinterlegt sind und die anzusteuernde Aktion (116) aus dem Datenfeld (120) ausgelesen wird, das dem Schlupfzustand (110) zugeordnet ist.

6. Verfahren gemäß einem der Ansprüche 4 bis 5, bei dem ein erster Wert eines den Schlupfzustand (110) kennzeichnenden Wertepaars mit einem Zeilenwertebereich des Zielschlupfbereichs (118) verglichen wird, um einen Zeilenbereich des Schlupfzustands (110) in der Matrix (112) zu bestimmen, wobei ein oberer Zeilenbereich bestimmt wird, wenn der erste Wert größer als der Zeilenwertebereich ist, ein mittlerer Zeilenbereich bestimmt wird, wenn der erste Wert innerhalb des Zeilenwertebereichs liegt und ein unterer Zeilenbereich bestimmt wird, wenn der erste Wert kleiner als der Zeilenwertebereich ist, wobei ein zweiter Wert des Wertepaars mit einem Spaltenwertebereich des Zielschlupfbereichs (118) verglichen wird, um einen Spaltenbereich des Schlupfzustands (110)in der Matrix (112) zu bestimmen, wobei ein rechter Spaltenbereich bestimmt wird, wenn der zweite Wert größer als der Spaltenwertebereich ist, ein mittlerer Spaltenbereich bestimmt wird, wenn der zweite Wert innerhalb des Spaltenwertebereichs liegt und ein linker Spaltenbereich bestimmt wird, wenn der zweite Wert kleiner als der Spaltenwertebereich ist, wobei der bestimmte Zeilenbereich und der bestimmte Spaltenbereich einen von acht möglichen Matrixteilbereichen (300, 302, 304, 306, 308, 310, 312, 314) der Matrix (118) rund um den Zielschlupfbereich (118) kennzeichnen, wobei die anzusteuernde Aktion (116) unter Verwendung des gekennzeichneten Matrixteilbereichs (300, 302, 304, 306, 308, 310, 312, 314) ausgewählt wird.

7. Verfahren gemäß einem der vorhergehenden Ansprüche, bei dem eine Abweichung eines zeitlich nach dem Ausführen der Aktion (116) erfassten nachfolgenden Schlupfzustands (110) von dem Zielschlupfbereich (118) ermittelt wird, wobei unter Verwendung der Abweichung ein Korrekturfaktor (334) für den Parameter (114) bestimmt und in dem Datenfeld (120) hinterlegt wird.

8. Steuergerät (102), das dazu ausgebildet ist, das Verfahren gemäß einem der vorhergehenden Ansprüche in entsprechenden Einrichtungen auszuführen, umzusetzen und/oder anzusteuern.

9. Computerprogrammprodukt, das dazu eingerichtet ist, einen Prozessor bei Ausführung des Computerprogrammprodukts dazu anzuleiten, das Verfahren gemäß einem der Ansprüche 1 bis 7 auszuführen, umzusetzen und/oder anzusteuern.

10. Maschinenlesbares Speichermedium, auf dem das Computerprogrammprodukt gemäß Anspruch 9 gespeichert ist.

## Claims

1. Method for controlling slip of at least one wheel (104) of a vehicle (100), wherein at least one parameter (114) of an action (116) to be performed is read from a matrix (112) using a slip state (110) of the wheel (104) if the slip state (110) is outside a target slip area (118) of the matrix (112), wherein, for reading, a data field (120) of the matrix (112) that is assigned to the slip state (110) is determined and the at least one parameter (114) is read from the data field (120), wherein, in order to perform the action (116), at least one actuator (106, 108) of the vehicle (100) is controlled using the parameter (114), **characterized in that**, for the slip state (110), a pair of values is formed from a relative speed value (124) of the wheel (104) and a relative acceleration value (126) of the wheel (104), wherein the relative speed value (124) represents a differential speed between the wheel (104) and a substrate.

2. Method according to Claim 1, in which the relative acceleration value (126) is determined using a progression of the relative speed value (124).

3. Method according to one of the preceding claims, in which the relative speed value (124) is determined using a wheel speed value (128a) of the wheel (104a) and a further wheel speed value (128b) of a further wheel (104b) on an axle of the wheel (104a).

4. Method according to one of the preceding claims, in which the action (116) to be controlled is furthermore selected using the slip state (110).

5. Method according to Claim 4, in which different actions (116) are stored in the data fields (120) of the matrix (112) and the action (116) to be controlled is read from the data field (120) assigned to the slip state (110).

6. Method according to one of Claims 4 to 5, in which a first value of a pair of values characterizing the slip state (110) is compared with a row value range of the target slip area (118) in order to determine a row area of the slip state (110) in the matrix (112), wherein an upper row area is determined if the first value is greater than the row value range, a middle row area is determined if the first value is within the row value range, and a lower row area is determined if the first value is less than the row value range, wherein a second value of the pair of values is compared with a column value range of the target slip area (118) in order to determine a column area of the slip state (110) in the matrix (112), wherein a right-hand column area is determined if the second value is greater than the column value range, a middle column area is determined if the second value is within the column value range, and a lefthand column area is determined if the second value is less than the column value range, where the determined row area and the determined column area indicate one of eight possible matrix subareas (300, 302, 304, 306, 308, 310, 312, 314) of the matrix (118) around the target slip area (118), wherein the action (116) to be controlled is selected using the indicated matrix subarea (300, 302, 304, 306, 308, 310, 312, 314).

7. Method according to one of the preceding claims, in which a deviation of a subsequent slip state (110) detected after the execution of the action (116) from the target slip area (118) is determined, wherein a correction factor (334) for the parameter (114) is determined using the deviation and is stored in the data field (120).

8. Control unit (102) which is designed to carry out, implement and/or control the method according to one of the preceding claims in corresponding devices.

9. Computer program product which is configured to instruct a processor to carry out, implement and/or control the method according to one of Claims 1 to 7 when executing the computer program product.

10. Machine-readable storage medium, on which the computer program product according to Claim 9 is stored.

## Revendications

1. Procédé de commande de patinage d'au moins une roue (104) d'un véhicule (100), au moins un paramètre (114) d'une action (116) devant être mise en œuvre étant extrait d'une matrice (112) au moyen d'un état de patinage (110) de la roue (104) lorsque l'état de patinage (110) se trouve à l'extérieur d'une plage de patinage cible (118) de la matrice (112), l'extraction s'effectuant en déterminant un champ de données (120) de la matrice (112) associé à l'état de patinage (110) et en extrayant ledit au moins un paramètre (114) du champ de données (120), au moins un actionneur (106, 108) du véhicule (100) étant commandé en utilisant le paramètre (114) afin de réaliser l'action (116), **caractérisé en ce que**, pour l'état de patinage (110), une paire de valeurs est créée à partir d'une valeur de vitesse relative (124) de la roue (104) et d'une valeur d'accélération relative (126) de la roue (104), la valeur de vitesse relative (124) représentant une vitesse différentielle entre la roue (104) et une chaussée.

2. Procédé selon la revendication 1, dans lequel la valeur d'accélération relative (126) est déterminée en utilisant une courbe d'évolution de la valeur de vitesse relative (124).

3. Procédé selon l'une des revendications précédentes, dans lequel la valeur de vitesse relative (124) est déterminée en utilisant une valeur de vitesse de roue (128a) de la roue (104a) et une autre valeur de vitesse de roue (128b) d'une autre roue (104b) située sur un même essieu que la roue (104a).

4. Procédé selon l'une des revendications précédentes, dans lequel l'action (116) devant être commandée est en outre sélectionnée en utilisant l'état de patinage (110).

5. Procédé selon la revendication 4, dans lequel différentes actions (116) sont mémorisées dans les champs de données (120) de la matrice (112), et l'action (116) devant être commandée est extraite du champ de données (120) qui est associé à l'état de patinage (110).

6. Procédé selon l'une des revendications 4 ou 5, dans lequel une première valeur d'une paire de valeurs caractérisant l'état de patinage (110) est comparée à une plage de valeurs de lignes de la plage de patinage cible (118), afin de déterminer une zone de lignes de l'état de patinage (110) dans la matrice (112), une zone de lignes supérieure étant déterminée lorsque la première valeur est supérieure à la plage de valeurs de lignes, une zone de lignes médiane étant déterminée lorsque la première valeur se situe à l'intérieur de la plage de valeurs de lignes, et une zone de lignes inférieure étant déterminée lorsque la première valeur est inférieure à la plage de valeurs de lignes, une deuxième valeur de la paire de valeurs étant comparée à une plage de valeurs de colonnes de la plage de patinage cible (118), afin de déterminer une zone de colonnes de l'état de patinage (110) dans la matrice (112), une zone de colonnes de droite étant déterminée lorsque la deuxième valeur est supérieure à la plage de valeurs de colonnes, une zone de colonnes médiane étant déterminée lorsque la deuxième valeur se situe à l'intérieur de la plage de valeurs de colonnes, et une zone de colonnes de gauche étant déterminée lorsque la deuxième valeur est inférieure à la plage de valeurs de colonnes, la zone de lignes déterminée et la zone de colonnes déterminée caractérisant l'une de huit zones partielles de matrice (300, 302, 304, 306, 308, 310, 312, 314) possibles de la matrice (118) entourant la plage de patinage cible (118), l'action (116) devant être commandée étant sélectionnée en utilisant la zone partielle de matrice (300, 302, 304, 306, 308, 310, 312, 314) caractérisée.

7. Procédé selon l'une des revendications précédentes, dans lequel un écart entre un état de patinage (110) suivant, détecté temporellement après la mise en œuvre de l'action (116), et la plage de patinage cible (118) est déterminé, un facteur de correction (334) du paramètre (114) étant déterminé en utilisant ledit écart et étant mémorisé dans le champ de données (120).

8. Dispositif de commande (102), conçu de façon à exécuter, mettre en œuvre et/ou commander le procédé selon l'une des revendications précédentes dans des dispositifs correspondants.

9. Produit de programme d'ordinateur adapté pour, lors de l'exécution du produit de programme d'ordinateur, guider un processeur pour exécuter, mettre en œuvre et/ou commander le procédé selon l'une des revendications 1 à 7.

10. Support de stockage lisible par machine sur lequel est mémorisé le produit programme d'ordinateur selon la revendication 9.
